# EUROPÄISCHE PATENTSCHRIFT

(11) **EP 1 463 429 B1**
(45) Veröffentlichungstag und Bekanntmachung des Hinweises auf die Patenterteilung: **25.10.2006**
(21) Anmeldenummer: 02798291.7
(22) Anmeldetag: 20.12.2002
(51) Int. Cl.: A47J 37/10

(54) **KOCHGESCHIRR**
COOKING UTENSIL
USTENSILE DE CUISINE

(30) Priorität: 10.01.2002 DE 10200752
(43) Veröffentlichungstag der Anmeldung: 06.10.2004
(73) Patentinhaber: Elo Stahlwaren Karl Grünewald & Sohn GmbH & Co. KG, 55595 Spabrücken (DE)
(72) Erfinder: GRÜNEWALD, Marcus, 55595 Spabrücken (DE)
(74) Vertreter: Wüstefeld, Regine Marie
(86) Internationale Anmeldenummer: PCT/DE2002/004680
(87) Internationale Veröffentlichungsnummer: WO 2003/056990

(56) Entgegenhaltungen:
- DE-U- 29 922 255
- FR-A- 2 655 830
- US-A- 2 554 412

## Beschreibung

Die vorliegende Erfindung betrifft ein Kochgeschirr, insbesondere zum fettfreien Braten oder Garen von Brat- oder Gargut, mit einem Boden und einer Wandung, wobei der Boden einen erhöhten Abschnitt zur Auflage des Brat- oder Gargutes und eine den erhöhten Abschnitt umgebende, weitgehend ringförmige Vertiefung aufweist und wobei der erhöhte Abschnitt zumindest eine Rille aufweist.
Hintergrund für ein derartiges Kochgeschirr, welches in der Regel als Pfanne mit Stiel vorliegt, ist eine fettarme Lebensmittelzubereitung für eine kalorienbewusste Ernährung.

Die Lehre der vorliegenden Patentanmeldung geht von einem Stand der Technik aus, der sich aus der US 2198647 A ergibt. Das dort offenbarte Kochgeschirr ist entweder nur als Bratpfanne oder nur als Grillpfanne ausgebildet oder vereint beides - Bratpfanne und Grillpfanne - in sich. Im letzteren Fall wird dann die Pfanne je nach gewünschter Funktion umgedreht. Bei der Grillpfanne ist ein erhöhter Abschnitt vorgesehen, der den Grill mit parallelen Grillrippen trägt. Die Vertiefungen zwischen den Rippen haben große Abmessungen und sind so tief, dass rückgeführtes Bratfett das auf den Grillrippen aufliegende Bratgut nicht erreicht. Insofern ist mit der Grillpfanne die erneute Benetzung des Bratgutes nicht möglich. Was die konvexe Wölbung der Grillpfanne oder der Grillpfannenseite des Kombinationsgeschirrs angeht, so verhindert die stark strukturierte Oberfläche mit parallelen Rippen ein allseitiges Abfließen. Dies ist aber deshalb bedeutungslos, weil ein erneutes Benetzen des Bratgutes dort keine Rolle spielt. Die Bratpfanne oder die Bratpfannenseite des Kombinationsgeschirrs dagegen hat eine konkave Wölbung, in der sich das Bratfett sammelt.

Aus der US 3847068 A ist eine Pfanne mit einem Boden und mit einem erhöhten, konvex gebogenen Abschnitt bekannt. Auf dem erhöhten und konvex gebogenen Abschnitt wird das Gut gegart oder gebraten. Das Bratfett oder anderweitige Flüssigkeiten können in eine ringförmige Vertiefung abfließen. Es sind jedoch Bedarfsfälle möglich, in denen das Gut nochmals mit Öl oder dem Bratsaft benetzt werden soll, sei es, um ein Ankleben zu verhindern oder eine Aromatisierung oder Befeuchtung des Gutes vorzunehmen. Bei der bekannten Pfanne ist die umlaufende Vertiefung durch eine Kante vom erhöhten Abschnitt abgetrennt, so dass eine Rückführung von Flüssigkeit aus der Vertiefung sehr schwer, wenn überhaupt, möglich ist.

Ein weiteres Kochgeschirr ist bspw. aus der US 1 467 272 bekannt. Es handelt sich dort um eine Pfanne mit einer umlaufenden Vertiefung und einem erhöhten Abschnitt. Der erhöhte Abschnitt definiert eine plane Bratfläche, die von einem unterbrochenen Rand umgeben ist. Über die Unterbrechungen kann Bratfett abfließen. Bei dieser Pfanne ist nachteilig, dass das Bratfett und/oder die aus dem Gut austretenden Flüssigkeiten sich zunächst auf der planen Bratfläche ansammeln müssen, bevor sie über die Unterbrechungen abfließen können. Es ergibt sich somit eine unerwünschte Verweildauer des Gutes im Fett.

Die DE 296 05 888 U1 zeigt eine Pfanne, wobei sich Rinnen über den gesamten Pfannenboden erstrecken. Des weiteren ist eine Mulde vorgesehen, in die die Rinnen weitgehend münden und in die das Fett abläuft. Die Vertiefungen der Rinnen werden als zur Mulde geneigt beschrieben, während die Erhebungen alle dieselbe Höhe aufweisen und einen planen, gegenüber der Mulde erhöhten Abschnitt ausbilden. Bei dieser Pfanne ist das Reinigungsproblem aufgrund der Bratflächenstrukturierung nachteilig. Außerdem werden durch die Rinnen Kältebrücken zum Brat- oder Gargut gebildet, was sich nachteilig auf dessen Zubereitung und / oder Zubereitungszeit auswirken könnte.. Die in Rede stehenden Rinnen sind auch nicht geeignet, Bratfett rückzuführen, weil das Gut erhöht auf den Erhebungen angeordnet ist und eine Benetzung nicht stattfinden würde.

Ein weiteres Kochgeschirr ist in der DE 299 22 255 U1 offenbart. Mit diesem Kochgeschirr soll das Grillen und die Vermeidung des Kontaktes zwischen Bratfett und Bratgut realisiert werden. Es ist eine gerade Auflage für das Bratgut vorgesehen, die aus einer Aneinanderreihung von Erhebungen gebildet ist. Gemäß einem Ausführungsbeispiel hat die Oberseite der Bratgutauflage die Form eines Firstes, worüber ein allseitiges Abfließen von Bratfett nicht realisierbar ist.

Ausgehend von der US 2198647 als gattungsbildendem Stand der Technik liegt der Lehre der vorliegenden Patentanmeldung die Aufgabe zugrunde, ein Kochgeschirr der in Rede stehenden Art anzugeben, das eine Rückführung von Bratfett und anderen Flüssigkeiten auf den erhöhten Abschnitt bei kurzer Verweildauer ermöglicht.

Die voranstehende Aufgabe wird durch die Merkmale des Patentanspruches 1 gelöst. Danach ist ein Kochgeschirr der in Rede stehenden Art derart ausgestaltet, dass der erhöhte Abschnitt derart konvex gebogen bzw. gewölbt ist, dass Bratfett oder anderweitige Flüssigkeit nach allen Seiten in die Vertiefung abfließen kann, dass die Rille die temporäre Rückführung von Bratfett oder anderweitiger Flüssigkeiten von der Vertiefung zum erhöhten Abschnitt ermöglicht, so dass eine Benetzung des Brat- oder Gargutes stattfindet.

Zunächst ist erkannt worden, dass eine Rückführung von Bratfett und anderen Flüssigkeiten auf den erhöhten Abschnitt zur Benetzung des Gutes im Bedarfsfall wünschenswert ist, gleichzeitig aber auch die rückgeführte Flüssigkeit eine kurze Verweildauer haben soll. Erfindungsgemäß wird zumindest eine Rille zwischen Vertiefung und erhöhten Abschnitt vorgesehen, über die die Flüssigkeit aus der Vertiefung zum Gut bzw. zum erhöhten Abschnitt zurückgeführt wird, dann aber wieder - wegen der konvexen Wölbung - prompt wieder nach allen Seiten ablaufen kann.

Die Beibehaltung der für sich bekannten konvexen Wölbung mit einer wenig strukturierten Oberfläche ist dahingehend vorteilhaft, dass zum einen eine schwer zu reinigende Bodenstruktur, zum anderen ein längerer Sammelvorgang an Fett und Flüssigkeit auf dem erhöhten Abschnitt in Form einer planen Bratfläche vermieden werden kann. Bratfett oder anderweitige Flüssigkeiten können in allen Richtungen in die Vertiefung abfließen. In der Regel handelt es sich bei der konvexen Wölbung um einen in der Aufsicht kreisrunden erhöhten Abschnitt, dessen Zentrum die höchste Erhebung ausbildet. Es sind hier jedoch auch andere Formgebungen möglich, gerade im Hinblick auf geometrisch unterteilte oder eckige Pfannen, wobei dort die höchste Erhebung nicht unbedingt im Zentrum des erhöhten Abschnittes liegen muss.

Damit nun ein Festkleben mangels ausreichendem Bratfett noch besser ausgeschlossen werden kann, könnte die konvexe Biegung des erhöhten Abschnittes besonders schwach ausgeprägt sein. Bspw. könnte der Radius der konvexen Biegung des erhöhten Abschnittes ca. 1400 mm bis 4000 mm betragen. Durch die geringe Krümmung wird ein langsames Abfließen erreicht, wobei die Adhäsionskräfte zwischen dem Bratfett und der Bodenoberfläche langsamer überwunden werden. Auf diese Weise steht genügend Bratfett für das Gut zur Verfügung. Weitgehend verzichtbar ist das Bratfett dann, wenn die Poren des Gutes geschlossen sind und hierdurch die Gefahr eines Festklebens ohnehin vermindert bzw. weitgehend ausgeschlossen ist.

Nach einer besonders bevorzugten Ausführungsform könnte die konvexe Biegung des erhöhten Abschnittes des Kochgeschirrs erst während des Erhitzens des Heizbereiches bzw. der Kochstelle ausgebildet werden. Da nur ein geringfügiger Bedarf an Konvexität besteht, um das Bratfett zum Ablaufen zu bringen und dieses zunächst auch noch zwischen Brat- bzw. Gargut wirken soll, ist es von enormem Vorteil, wenn zunächst das Bratfett auf dem erhöhten Abschnitt verbleibt und dann mit zunehmender Erwärmung der Kochstelle und zunehmender Erwärmung des Kochgeschirrbodens und damit verbundener Ausdehnung des erhöhten Abschnitts zur Ausbildung einer Wölbung zum Abfließen in die Vertiefung kommt.

Um einerseits dem Abfließen des Bratfettes kein Hindernis zu bieten und andererseits der Reinigung förderlich zu sein, könnte der erhöhte Abschnitt weitgehend kontinuierlich, ohne Ausbildung einer Kante, in die Vertiefung übergehen. Die Vertiefung ist in zweckmäßiger Weise konkav gebogen, wobei der Radius der konkaven Biegung der Vertiefung ca. 13 mm bis 15 mm betragen könnte.

Für den Fall, dass Wert darauf gelegt wird, dass nach dem Ablaufen in die Vertiefung nochmals Bratfett oder die aus dem Gut austretende Flüssigkeit zwischen das Gut und den Boden gelangt, könnte der erhöhte Abschnitt zumindest eine Rille aufweisen. Die Rille mündet in die Vertiefung, so dass die temporäre Rückführung von Bratfett oder anderweitige Flüssigkeiten zum erhöhten Abschnitt ermöglicht wird. Damit keine übermäßige Benetzung mit Bratenfett und anderweitigen Flüssigkeiten stattfinden braucht, könnte die Rille in Richtung Vertiefung divergieren, bzw. in Richtung des Brat- oder Gargutes konvergieren. So kann eine Dosierung - wenn gewünscht - erreicht werden. In vorteilhafter Weise könnte die Rille gegenüber vom Pfannenstiel angeordnet sein, so dass durch leichtes Nach-unten-Drücken des Pfannenstiels die Rückführung des abgelaufenen Bratfettes aus der Vertiefung zum erhöhten Abschnitt realisiert werden kann.

Bei der Ausgestaltung der Rille wäre es von Vorteil, wenn diese keine Hinterschneidungen oder Kanten ausbildet, sondern sich kontinuierlich in die kantenlose Oberfläche des erhöhten Abschnittes einfügt. Dabei könnte der Radius der konkaven Biegung der Rille unter Berücksichtigung des kon- bzw. divergierenden Verlaufs der Rille in Längsrichtung im Schnitt ca. 2 bis 3 mm betragen und der Radius der konvexen Biegungen der Rille ca. 3 mm betragen.

Im Hinblick auf die Rückführung von Bratfett unter Brat- oder Gargut größerer Ausdehnung könnten mehrere, insbesondere parallel, angeordnete Rillen vorgesehen sein, wobei die Radien der konkaven Biegung der äußeren Rillen etwas geringer sein könnten als die der innenliegenden Rillen. Die außenliegenden Bereiche des Brat- oder Gargutes werden direkt mit dem aus dem innenliegenden Bereich wieder infolge konvexer Wölbung des erhöhten Abschnitts allseits - nicht nur innerhalb der Rille - in Richtung Vertiefung strömenden Bratfett versorgt. Insofern kann die Rückführung von Bratfett in den äußeren Rillen sparsamer gehalten werden. Um die Rückführung des gesammelten Bratfettes unter das gesamte Brat- oder Gargut zu ermöglichen, könnte die Rille bzw. könnten sich die Rillen über mehr als die Hälfte des erhöhten Abschnittes erstrecken. Es kommt eben darauf an, dass die höchste Erhebung des erhöhten Abschnittes, die in der Regel im Zentrum liegt, übergriffen wird, um dann ein allseitiges Abfließen und Benetzen zu bewirken.

Um ein Reservoir verfügbar zu haben, aus dem eine größere Menge an Bratfett rückgeführt werden kann, könnte die Vertiefung zumindest eine Erweiterung zum Sammeln von Bratfett oder anderweitige Flüssigkeiten aufweisen. Auch mehrere, bspw. zwei bis vier, Reservoirs bzw. Erweiterungen könnten vorgesehen sein, die radial in vorgegebenen Abständen angeordnet sein könnten. Bevorzugt ist jedoch wegen der einfachen Hebelbewegung am Pfannenstiel ein einziges Reservoir gegenüber demselben. Ein stetes Ansammeln von Bratfett im Reservoir bzw. in der Erweiterung könnte dadurch unterstützt werden, dass die Vertiefung ein Gefälle zur Erweiterung hin aufweist. Außerdem könnte die Formgebung der Erweiterung kantenlos sein und Rundungen aufweisen, die sich in die homogene, glatte und deshalb leicht reinigbare Oberfläche des Bodens des erfindungsgemäßen Kochgeschirrs einfügen. Im Hinblick auf die Rückführung des Bratfettes über die voranstehend beschriebenen Rillen könnten diese in die Erweiterung münden. Bei einer Ausführungsform ohne Rillen könnte der Zweck der ungeführten Bratfettrückführung auch durch die Schwenkbewegung erreicht werden. Wesentlich ist jedenfalls, dass auch rückgeführtes Bratfett infolge Konvexität des erhöhten Abschnittes sofort wieder in die Vertiefung abläuft. Außer der Cholesterinsenkung besteht ein weitere Vorteil des Abfließen des Bratfettes darin, dass das Hochspritzen heißen Fettes weitgehend vermieden wird.

In materialmäßiger Hinsicht könnte der Boden und die Wandung des Kochgeschirrs aus Aluminium, Eisen, Edelstahl oder Kupfer gefertigt sein. Herstellungstechnisch könnte es sich um Aluminiumguss, um Gusseisen, um gedrücktes Aluminium, um gestanzten Edelstahl handeln. Bei einem Kochgeschirr aus Edelstahl könnte eine Antihaftveredelung vorgesehen sein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung zweier Ausführungsbeispiele der Erfindung anhand der Zeichnung zu verweisen. In Verbindung mit der Erläuterung der angeführten Ausführungsbeispiele der Erfindung werden auch im allgemeinen bevorzugte Ausgestaltungen und Weiterbildungen der Lehre erläutert. In der Zeichnung zeigen
- Fig. 1: in schematischer Darstellung, einen Längsschnitt durch ein erstes Ausführungsbeispiel des erfindungsgemäßen Kochgeschirrs,
- Fig. 2: eine Aufsicht auf ein zweites Ausführungsbeispiel des erfindungsgemäßen Kochgeschirrs,
- Fig. 3: eine Schnittdarstellung entlang der Linie B-B der Fig. 2 und
- Fig. 4: eine Schnittdarstellung entlang der Linie C-C der Fig. 2.

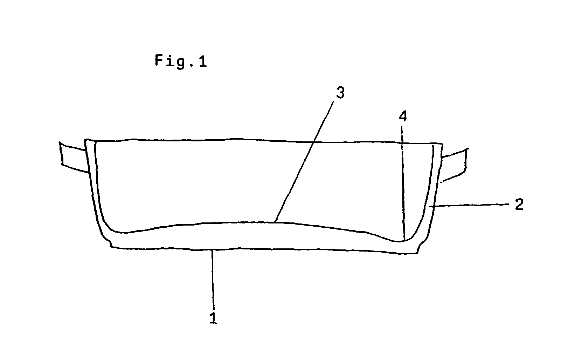

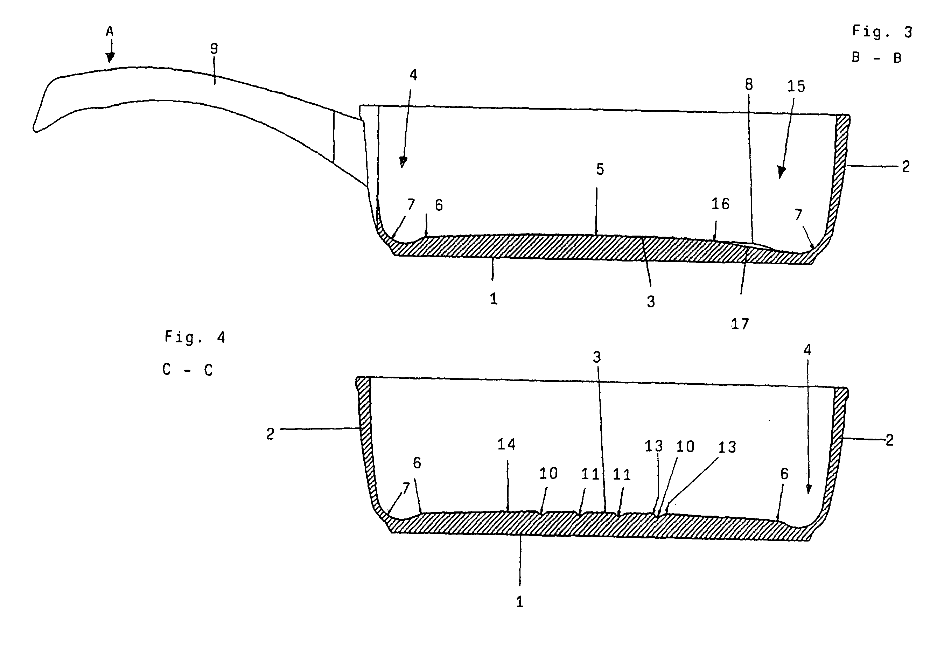

Aus Fig. 1 ergibt sich ein Kochgeschirr in Form einer Servierpfanne und aus Fig. 3 in Form einer Pfanne mit Stiel zum fettfreien Braten oder Garen von Brat- oder Gargut, mit einem Boden 1 und einer Wandung 2, wobei der Boden 1 einen erhöhten Abschnitt 3 zur Auflage des Brat- oder Gargutes und eine den erhöhten Abschnitt 3 umgebende, weitgehend ringförmige Vertiefung 4 aufweist.

Der erhöhte Abschnitt 3 ist konvex gebogen bzw. gewölbt, so dass Bratfett oder anderweitige Flüssigkeiten in die Vertiefung 4 abfließen können.

In den Fig. 1, 3 und 4 ist gezeigt, dass die konvexe Biegung des erhöhten Abschnittes sehr schwach ausgeprägt ist. Das zweite Ausführungsbeispiel gemäß Fig. 3 sieht vor, dass der Radius 5 der konvexen Biegung des erhöhten Abschnittes 3 ca. 1400 mm bis 4000 mm beträgt.

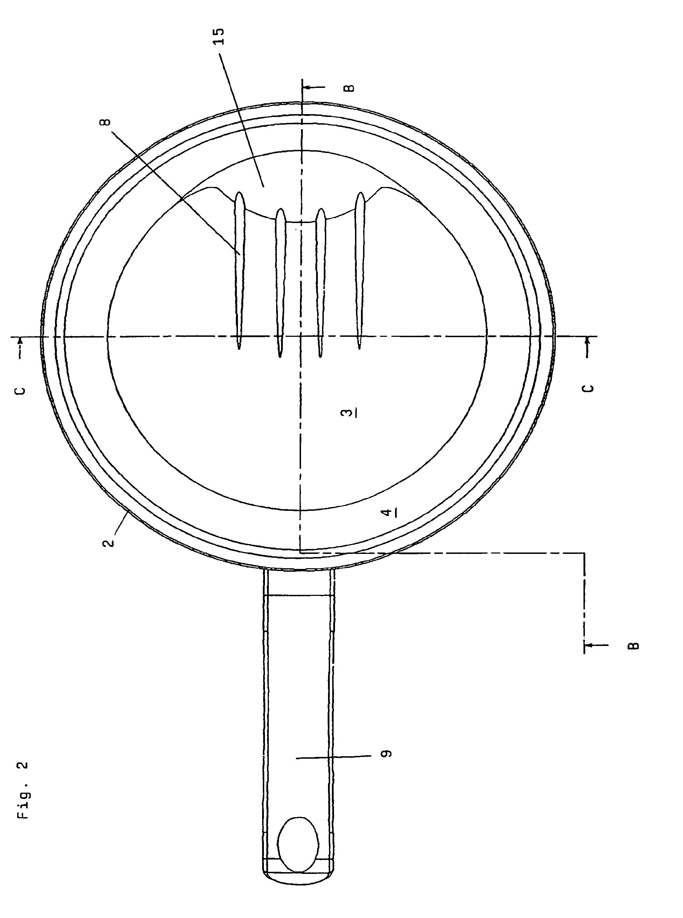

Bei den beiden ausgewählten Ausführungsbeispielen ist die konvexe Biegung des erhöhten Abschnittes 3 direkt - auch im nicht erhitzten - Zustand gegeben und der erhöhte Abschnitt 3 geht weitgehend kontinuierlich, ohne Ausbildung einer Kante, in die Vertiefung 4 über. Der Radius 6 am Übergang von dem erhöhten Abschnitt 3 zur Vertiefung 4 beträgt gemäß dem zweiten Ausführungsbeispiel ca. 15 mm bei der Schnittdarstellung entlang der Linie C-C der Fig. 2 in Fig. 4 und ca. 5 bis 6 mm bei der Schnittdarstellung entlang der Linie B-B der Fig. 2 in Fig. 3. Die Vertiefung 4 ist konkav gebogen. Das zweite Ausführungsbeispiel des erfindungsgemäßen Kochgeschirr sieht bezüglich der konkaven Biegung der Vertiefung 4 einen Radius 7 von ca. 13 mm bis 15 mm vor.

Die Figuren 2 und 3 zeigen, dass der erhöhte Abschnitt 3 vier parallele Rillen 8 aufweist, die der temporären Rückführung von Bratfett oder anderweitige Flüssigkeiten zum erhöhten Abschnitt 3 ermöglichen. Da die Rillen 8 dem Pfannenstiel 9 gegenüberliegend angeordnet sind, kann zur Rückführung des Bratfetts bzw. sonstiger Brat- oder Gargutflüssigkeiten auf den Pfannenstiel 9 Kraft in Richtung des Pfeils A ausgeübt werden. Die Rillen 8 münden in die Vertiefung 4, divergieren in Richtung Vertiefung 4 und erstrecken sich über mehr als die Hälfte des erhöhten Abschnittes 3.

Aus Fig. 4 ergibt sich, dass die Rillen 8 im erhöhten Abschnitt 3 derart ausgebildet sind, dass sich keine Hinterschneidungen ergeben und eine weitgehend kantenlose Oberfläche des erhöhten Abschnittes 3 vorliegt. Der Radius 10 der konkaven Biegung der beiden außenliegenden Rillen 8 beträgt 2,61 mm. Der Radius 11 der konkaven Biegung der beiden innenliegenden Rillen 8 beträgt 2,63 mm. Der Radius 13 der konvexen Biegungen der Rille 8 beträgt 3 mm. Die hierdurch erhaltenen Rundungen erleichtern die Reinigung. Der Radius 14 des erhöhten Abschnittes 3, im Bereich zwischen der außenliegenden Rille 8 und der Vertiefung 4 beträgt 2000 mm.

Die Vertiefung 4 weist eine in den Fig. 2 und 3 dargestellte Erweiterung 15 zum Sammeln von Bratfett oder anderweitiger Flüssigkeiten auf, in die die Rillen 8 münden. Auch die Erweiterung ist weitgehend kantenlos geformt. Der erhöhte Abschnitt 3 geht mit einer etwas stärkeren Krümmung bei einem Radius 16 von ca. 14 bis 15 mm in die Erweiterung 15 über die dann eine sehr flache Biegung mit einem Radius 17 von 400 mm in Richtung der Wandung 2 ausbildet. Der Radius 7 der Vertiefung 4 im Bereich der Erweiterung 15 ist ca. 1,8 bis 2 mm größer als der Radius 7 im Normalbereich der Vertiefung 4.

Das Kochgeschirr gemäß dem ersten Ausführungsbeispiel ist aus Kupfer gefertigt. Das Kochgeschirr gemäß dem zweiten Ausführungsbeispiel ist aus Edelstahl gefertigt, wobei eine Antihaftveredelung vorgesehen ist.

Hinsichtlich weiterer, in den Figuren nicht gezeigter Merkmale wird auf den allgemeinen Teil der Beschreibung verwiesen.

Abschließend sei darauf hingewiesen, dass die erfindungsgemäße Lehre nicht auf die voranstehend erörterten Ausführungsbeispiele eingeschränkt ist.

## Patentansprüche

1. Kochgeschirr, insbesondere zum fettfreien Braten oder Garen von Brat- oder Gargut, mit einem Boden (1) und einer Wandung (2), wobei der Boden (1) einen erhöhten Abschnitt (3) zur Auflage des Brat- oder Gargutes und eine den erhöhten Abschnitt (3) umgebende, weitgehend ringförmige Vertiefung (4) aufweist und wobei der erhöhte Abschnitt (3) zumindest eine Rille (8) aufweist
**dadurch gekennzeichnet,**
**dass** der erhöhte Abschnitt (3) derart konvex gebogen bzw. gewölbt ist, dass Bratfett oder anderweitige Flüssigkeit nach allen Seiten in die Vertiefung (4) abfließen kann, dass die Rille (8) die temporäre Rückführung von Bratfett oder anderweitiger Flüssigkeiten von der Vertiefung (4) zum erhöhten Abschnitt (3) ermöglicht, so dass eine Benetzung des Brat- oder Gargutes stattfindet.

2. Kochgeschirr nach Anspruch 1, **dadurch gekennzeichnet, dass** die konvexe Biegung des erhöhten Abschnittes (3) schwach ausgeprägt ist und dass der Radius (5) der konvexen Biegung des erhöhten Abschnittes (3) ca. 1400 mm bis 4000 mm beträgt.

3. Kochgeschirr nach Anspruch 1 oder 2, **dadurch gekennzeichnet, dass** der erhöhte Abschnitt (3) die konvexe Biegung während des Erhitzens des Heizbereiches bzw. der Kochstelle unterhalb des Kochgeschirrs ausbildet.

4. Kochgeschirr nach einem der Ansprüche 1 bis 3, **dadurch gekennzeichnet, dass** der erhöhte Abschnitt (3) weitgehend kontinuierlich, ohne Ausbildung einer Kante, in die Vertiefung (4) übergeht.

5. Kochgeschirr nach einem der Ansprüche 1 bis 4, **dadurch gekennzeichnet, dass** die Vertiefung (4) konkav gebogen ist und dass der Radius (7) der konkaven Biegung der Vertiefung (4) ca. 13 mm bis 15 mm beträgt.

6. Kochgeschirr nach einem der Ansprüche 1 bis 5, **dadurch gekennzeichnet, dass** die Rille (8) in die Vertiefung (4) mündet und vorzugsweise in Richtung Vertiefung (4) divergiert.

7. Kochgeschirr nach einem der Ansprüche 1 bis 6, **dadurch gekennzeichnet, dass** die Rille (8) im erhöhten Abschnitt (3) derart ausgebildet ist, dass sich keine Hinterschneidungen ergeben und eine weitgehend kantenlose Oberfläche des erhöhten Abschnittes (3) vorliegt.

8. Kochgeschirr nach einem der Ansprüche 1 bis 7, **dadurch gekennzeichnet, dass** der Radius (10, 11) der konkaven Biegung der Rille (8) ca. 2 bis 3 mm beträgt und dass der Radius (13) der konvexen Biegungen der Rille (8) ca. 3 mm beträgt.

9. Kochgeschirr nach einem der Ansprüche 1 bis 8, **dadurch gekennzeichnet, dass** mehrere, insbesondere parallel, angeordnete Rillen (8) vorgesehen sind und dass die Radien (10) der konkaven Biegung der äußeren Rillen (8) etwas geringer sind als die der innenliegenden Rillen (8).

10. Kochgeschirr nach einem der Ansprüche 1 bis 9, **dadurch gekennzeichnet, dass** die Rille (8) sich über mehr als die Hälfte des erhöhten Abschnittes (3) erstreckt.

11. Kochgeschirr nach einem der Ansprüche 1 bis 10, **dadurch gekennzeichnet, dass** die Vertiefung (4) zumindest eine Erweiterung (15) zum Sammeln von Bratfett oder anderweitige Flüssigkeiten aufweist.

12. Kochgeschirr nach Anspruch 11, **dadurch gekennzeichnet, dass** die Vertiefung ein Gefälle zur Erweiterung hin aufweist.

13. Kochgeschirr nach einem der Ansprüche 1 bis 12 in Verbindung mit den Ansprüchen 11 oder 12, **dadurch gekennzeichnet, dass** die Rille (8) in die Erweiterung (15) mündet.

14. Kochgeschirr nach einem der Ansprüche 1 bis 13, **dadurch gekennzeichnet, dass** der Boden (1) und die Wandung (2) aus Aluminium, Eisen, Edelstahl oder Kupfer gefertigt sind.

15. Kochgeschirr nach Anspruch 14, **dadurch gekennzeichnet**, das Kochgeschirr aus Edelstahl mit einer Antihaftveredelung versiegelt ist.

## Claims

1. A cooking utensil, particularly for fat-free frying or cooking of food to be fried or cooked, having a floor (1) and a wall (2), the floor (1) having an elevated section (3) for placing the food to be fried or cooked and a largely annular depression (4) enclosing the elevated section (3), and the elevated section (3) having at least one groove (8),
**characterized in that** the elevated section (3) is convexly curved and/or arched in such a way that frying fat or other liquids may drain into the depression (4) on all sides, and the groove (8) allows the temporary return of frying fat or other liquids from the depression (4) to the elevated section (3), so that wetting of the food to be fried or cooked occurs.

2. The cooking utensil according to Claim 1,
**characterized in that** the convex curve of the elevated section (3) is weakly pronounced and the radius (5) of the convex curve of the elevated section (3) is approximately 1400 mm to 4000 mm.

3. The cooking utensil according to Claim 1 or 2,
**characterized in that** the elevated section (3) forms the convex curve during the heating of the heating region and/or the burner below the cooking utensil.

4. The cooking utensil according to one of Claims 1 through 3,
**characterized in that** the elevated section (3) passes into the depression (4) largely continuously, without forming an edge.

5. The cooking utensil according to one of Claims 1 through 4,
**characterized in that** the depression (4) is curved concavely and the radius (7) of the concave curve of the depression (4) is approximately 13 mm to 15 mm.

6. The cooking utensil according to one of Claims 1 through 5,
**characterized in that** the groove (8) discharges into the depression (4) and preferably diverges in the direction of the depression (4).

7. The cooking utensil according to one of Claims 1 through 6,
**characterized in that** the groove (8) in the elevated section (3) is implemented in such a way that no undercuts result and a largely edgeless surface of the elevated section (3) is provided.

8. The cooking utensil according to one of Claims 1 through 7,
**characterized in that** the radius (10, 11) of the concave curve of the groove (8) is approximately 2 to 3 mm and the radius (13) of the convex curves of the groove (8) is approximately 3 mm.

9. The cooking utensil according to one of Claims 1 through 8,
**characterized in that** multiple, particularly parallel grooves (8) are provided and the radii (10) of the concave curve of the outer grooves (8) are somewhat smaller than those of the inner grooves (8).

10. The cooking utensil according to one of Claims 1 through 9,
**characterized in that** the groove (8) extends over more than half of the elevated section (3).

11. The cooking utensil according to one of Claims 1 through 10,
**characterized in that** the depression (4) has at least one expansion (15) for collecting frying fat or other liquids.

12. The cooking utensil according to Claim 11,
**characterized in that** the depression has a slope toward the expansion.

13. The cooking utensil according to one of Claims 1 through 12 in connection with Claims 11 or 12,
**characterized in that** the groove (8) discharges into the expansion (15).

14. The cooking utensil according to one of Claims 1 through 13,
**characterized in that** the floor (1) and the wall (2) are manufactured from aluminum, iron, stainless steel, or copper.

15. The cooking utensil according to Claim 14,
**characterized in that** cooking utensils made of stainless steel are sealed with an antistick coating.

## Revendications

1. Batterie de cuisine, en particulier pour la cuisson sans graisse d'aliments à cuire ou à rôtir, avec un fond (1) et une paroi (2), le fond (1) présentant une section surélevée (3) pour l'application de l'aliment à cuire ou à rôtir et une cavité sensiblement annulaire (4) entourant la section surélevée (3), et la section surélevée (3) présentant au moins un sillon (8),
**caractérisée en ce que** la section surélevée (3) est incurvée convexe respectivement bombée, **en ce que** la graisse à cuire ou autre liquide peut s'écouler de tous les côtés dans la cavité (4), **en ce que** le sillon (8) permet le retour temporaire de la graisse de cuisson ou d'autres liquides depuis la cavité (4) vers la section surélevée (3) de sorte qu'une humectation de l'aliment à cuire se produit.

2. Batterie de cuisine selon la revendication 1, **caractérisée en ce que** la flexion convexe de la section surélevée (3) est faiblement marquée et que le rayon (5) de la flexion convexe de la section surélevée (3) est comprise environ entre 1400 et 4000 mm.

3. Batterie de cuisine selon la revendication 1 ou 2, **caractérisée en ce que** la section surélevée (3) forme la flexion convexe pendant l'échauffement de la zone de chauffage respectivement du point de cuisson en dessous de la batterie de cuisine.

4. Batterie de cuisine selon l'une des revendications 1 à 3, **caractérisée en ce que** la section surélevée (3) se poursuit largement en continu sans formation d'un bord par la cavité (4).

5. Batterie de cuisine selon l'une des revendications 1 à 4, **caractérisée en ce que** la cavité (4) est incurvée concave et **en ce que** le rayon (7) de la flexion concave de la cavité (4) est compris entre environ 13 mm et 15 mm.

6. Batterie de cuisine selon l'une des revendications 1 à 5, **caractérisée en ce que** le sillon (8) débouche dans la cavité (4) et diverge de préférence en direction de la cavité (4).

7. Batterie de cuisine selon l'une des revendications 1 à 6, **caractérisée en ce que** le sillon (8) est réalisé dans la section surélevée (3) de sorte qu'il ne se forme aucune contre-découpe et qu'il y a une surface largement sans bord de la section surélevée (3).

8. Batterie de cuisine selon l'une des revendications 1 à 7, **caractérisée en ce que** le rayon (10, 11) de la flexion concave du sillon (8) est compris environ entre 2 et 3 mm et **en ce que** le rayon (13) de la flexion convexe du sillon (8) est d'environ 3 mm.

9. Batterie de cuisine selon l'une des revendications 1 à 3, **caractérisée en ce que** plusieurs sillons (8) disposés particulièrement en parallèle sont prévus et **en ce que** les rayons (10) de la flexion concave des sillons externes (8) sont un peu plus petits que ceux des sillons internes (8).

10. Batterie de cuisine selon l'une des revendications 1 à 9, **caractérisée en ce que** le sillon (8) s'étend sur plus de la moitié de la section surélevée (3).

11. Batterie de cuisine selon l'une des revendications 1 à 10, **caractérisée en ce que** la cavité (4) présente au moins un élargissement (15) pour collecter la graisse de cuisson ou tout autre liquide.

12. Batterie de cuisine selon la revendication 11, **caractérisé en ce que** la cavité présente une inclinaison débouchant dans l'élargissement.

13. Batterie de cuisine selon l'une des revendications 1 à 12, en association avec les revendications 11 ou 12, **caractérisée en ce que** le sillon (8) débouche dans l'élargissement (15).

14. Batterie de cuisine selon l'une des revendications 1 à 13, **caractérisée en ce que** le fond (1) et la paroi (2) sont fabriqués en aluminium, fer, acier inoxydable ou cuivre.

15. Batterie de cuisine selon la revendication 14, **caractérisée en ce que** la batterie de cuisine en acier inoxydable est scellée par un revêtement antiadhérent.
